# EUROPEAN PATENT SPECIFICATION

(11) **EP 4 094 274 B1**
(45) Date of publication and mention of the grant of the patent: **05.03.2025**
(21) Application number: 21702078.3
(22) Date of filing: 22.01.2021
(51) Int. Cl.: G21B 1/17, H05H 7/14, H01J 5/32, H01J 5/46, H01J 9/32, H01R 13/53, H01B 17/26

(54) **VACUUM CHAMBER SEAL**
VAKUUMKAMMERDICHTUNG
JOINT D'ÉTANCHÉITÉ DE CHAMBRE À VIDE

(30) Priority: 24.01.2020 GB 202001054
(43) Date of publication of application: 30.11.2022
(73) Proprietor: First Light Fusion Limited, Yarnton Oxfordshire OX5 1QU (GB)
(72) Inventor: HOLLIGAN, Paul, Oxford Industrial Park Mead Road Yarnton Oxfordshire OX5 1QU (GB); PARKIN, James, Oxford Industrial Park Mead Road Yarnton Oxfordshire OX5 1QU (GB); DARLING, Jamie, Oxford Industrial Park Mead Road Yarnton Oxfordshire OX5 1QU (GB); CABALLERO BENDIXSEN, Luis, Oxford Industrial Park Mead Road Yarnton Oxfordshire OX5 1QU (GB); HALL, Oliver, Oxford Industrial Park Mead Road Yarnton Oxfordshire OX5 1QU (GB)
(74) Representative: Dehns
(86) International application number: PCT/GB2021/050144
(87) International publication number: WO 2021/148800

(56) References cited:
- JP-A- 2018 063 880
- US-A- 5 491 300
- US-A1- 2005 141 585

## Description

This invention relates to a seal for a vacuum chamber, in particular to a seal between the walls of a vacuum chamber and a pair of power transmission plates extending into a vacuum chamber.

A number of different applications require a high voltage power supply to be fed into a vacuum chamber, for delivering to a load in the vacuum chamber, e.g. via a pair of power transmission plates. In order to maintain an effective vacuum in the vacuum chamber, a good seal around where the power supply enters the vacuum chamber needs to be provided. An effective vacuum helps to reduce the risk of electrical breakdown in the vacuum chamber. The seal also provides insulation between the power supply and the walls of the vacuum chamber, and between the power transmission plates of the high voltage supply. Such insulation also helps to reduce the risk of electrical breakdown, e.g. in the form of surface tracking, between the power transmission plates of the high voltage supply.

The presence of insulation, however, creates an inductance in the high voltage power supply, e.g. between the power transmission plates. For particular applications, for example when a fast discharge of the high voltage power supply to a load in the vacuum chamber is required, it may be beneficial to reduce the inductance as much as possible. However, if the inductance is to be reduced, this generally means that the (e.g. thickness of the) insulation has to be reduced, such that the risk of electrical breakdown may increase, particularly when high voltages are being used.

US 2005/141585 A1 describes a high voltage input apparatus for a magnetron in which first protrusions formed on lead conductors are caught by insulators and an insulating case, a ground metal is bonded to the insulating case, and expanded portions formed on the insulators are caught by the insulating case and the ground metal.

The present invention aims to provide an improved seal for a pair of power transmission plates that extend through the wall of a vacuum chamber.

The invention provides a seal for a vacuum chamber, wherein the vacuum chamber comprises a first wall and a second wall, the seal comprising:
a first outer insulation block for sealing between the first wall of the vacuum chamber and a first power transmission plate that extends from the interior of the vacuum chamber to the exterior of the vacuum chamber between the first and second walls of the vacuum chamber;
a second outer insulation block for sealing between the second wall of the vacuum chamber and a second power transmission plate that extends from the interior of the vacuum chamber to the exterior of the vacuum chamber between the first and second walls of the vacuum chamber;
an intermediate insulation block for sealing between the first and second power transmission plates, wherein the intermediate insulation block comprises one or more slots formed in a first side of the intermediate insulation block for facing the interior of the vacuum chamber and one or more slots formed in a second side of the intermediate insulation block for facing the exterior of the vacuum chamber;
one or more interior insulation sheets for extending between the first and second power transmission plates on the interior of the vacuum chamber, wherein the one or more interior insulation sheets are arranged in the one or more slots in the first side of the intermediate insulation block; and
one or more exterior insulation sheets for extending between the first and second power transmission plates on the exterior of the vacuum chamber, wherein the one or more exterior insulation sheets are arranged in the one or more slots in the second side of the intermediate insulation block.

The present invention provides a vacuum chamber seal, for sealing between the walls of (e.g. two halves of) a vacuum chamber and a pair of electric power transmission plates that extend through the vacuum chamber walls. The seal is made up of three insulation blocks that interleave the two vacuum chamber walls and the pair of power transmission plates. The insulation blocks, when installed in the vacuum chamber, are arranged such that there is a (first outer) insulation block between one of the vacuum chamber walls and one of the power transmission plates, another (second outer) insulation block between the other of the vacuum chamber walls and the other of the power transmission plates, and the final (intermediate) insulation block between the pair of power transmission plates. Thus each insulation block is arranged for sealing against the vacuum chamber walls and the power transmission plates, as appropriate. It will be seen that when the seal is assembled, the intermediate insulation block is positioned between the first and second outer insulation blocks, which lie at the outer edges of the seal.

The intermediate insulation block has one or more slots formed in either side of the insulation block. On a first side of the intermediate insulation block, for facing the interior of the vacuum chamber, one or more interior insulation sheets are located in the slot(s) on this side of the intermediate insulation block. On a second side of the intermediate insulation block, for facing the exterior of the vacuum chamber, one or more exterior insulation sheets are located in the slot(s) on this side of the intermediate insulation block. Thus insulation sheet(s) extend from the slots on either side of the intermediate insulation block. The insulation sheet(s) are provided for extending between the pair of power transmission plates on both the interior and exterior of the vacuum chamber.

Thus it will be appreciated that by providing a seal that includes insulation blocks for positioning between the walls of the vacuum and the pair of power transmission plates, an effective seal between the walls of the vacuum and the pair of power transmission plates may be provided, owing to the (e.g. substantial and solid) nature of the insulation blocks, which helps to enable a good vacuum to be established in the vacuum chamber. The insulation sheet(s) of the seal, for extending between the pair of power transmission plates (e.g. away from the walls of the vacuum chamber) help to allow the pair of power transmission plates to be brought closer together (e.g. than when they pass through the insulation blocks), thus helping to reduce the inductance between the pair of power transmission plates, while still providing sufficient insulation between them (e.g. to protect against electrical punch through, even when subject to a high electric field gradient).

It will be also appreciated that while the insulation sheets may provide good insulation between the pair of power transmission plates, the insulation sheets are less suitable for forming a seal directly between the walls of the vacuum chamber and the pair of power transmission plates; this is better provided by the insulation blocks. Thus the seal of the present invention exploits the beneficial properties of both the insulation blocks (i.e. a good seal) and the insulation sheets (i.e. providing a high dielectric strength barrier, helping to enable low inductance).

A transition between the insulation sheet(s) and insulation blocks of the seal is provided by arranging the insulation sheet(s) in the slot(s) on either of the intermediate insulation block. This helps to reduce the extent of the insulation blocks (e.g. confining them to the vicinity of the walls of the vacuum chamber), which helps to reduce the inductance between the pair of power transmission plates, while still allowing a good seal to be provided and insulating the power transmission plates from each other (and, e.g., from the walls of the vacuum chamber). This helps to allow the power transmission plates to deliver a high voltage and current into the (e.g. load in the) vacuum chamber, e.g. at a high discharge rate.

The slots in the intermediate insulation block also help to increase the path length between the power transmission plates. This helps to reduce the risk of electrical breakdown owing to surface tracking. Arranging the insulation sheets in the slots may also allow the insulation sheets to be replaced, when required, thus helping to provide a seal that is easy to maintain.

The seal of the present invention therefore helps to provide a good seal for a vacuum chamber where a pair of high voltage power transmission plates is required to be fed into the vacuum chamber. The seal helps to provide low inductance between the power transmission plates while providing good insulation and a good vacuum seal. This may allow the power transmission plates to deliver a high voltage and current to (e.g. a load in) the vacuum chamber that can be discharged quickly, while reducing the risk of electrical breakdown (e.g. while the power transmission plates are being discharged).

The vacuum chamber may be any suitable and desired type of vacuum chamber, with the first and second walls provided in any suitable and desired configuration. In a preferred embodiment the vacuum chamber comprises a load, wherein the first and second power transmission plates are arranged to deliver a voltage (and current) to the load. Therefore, the seal of the present invention may be used in a vacuum chamber, wherein the vacuum chamber comprises:
a first wall and a second wall defining the outer surface of the vacuum chamber;
a load within the vacuum chamber;
a first power transmission plate that extends from the interior of the vacuum chamber to the exterior of the vacuum chamber between the first and second walls of the vacuum chamber;
a second power transmission plate that extends from the interior of the vacuum chamber to the exterior of the vacuum chamber between the first and second walls of the vacuum chamber, wherein the first and second power transmission plates are arranged to deliver a voltage to the load; and
a seal as claimed in claim 1 for sealing between the first and second walls, and between the first and second power transmission plates.

The first and second walls may be arranged in any suitable and desired way, e.g. to form the vacuum chamber. Preferably the first and second walls comprise outer walls of the vacuum chamber. In one embodiment the vacuum chamber is substantially cylindrical, although the vacuum chamber may be any suitable and desired shape and size, e.g. depending on the intended use of the vacuum chamber. Thus preferably the first wall and the second wall together define a cylindrical outer wall of the vacuum chamber. Preferably the first wall and/or the second wall are (each) substantially cylindrical.

It will thus be appreciated that preferably the first and second walls of the vacuum chamber (and their edges that are sealed together by the seal of the present invention) extend around (e.g. all of) the perimeter of the vacuum chamber. Thus preferably the seal (and the components thereof, e.g. the insulation blocks and the insulation sheets) extends around (e.g. all of) the perimeter of the vacuum chamber. Thus preferably the seal (and the components thereof) comprises an annulus extending around the perimeter of the vacuum chamber between the first and second walls of the vacuum chamber.

Preferably the first and second walls of the vacuum chamber are held (e.g. clamped) together around the seal. Preferably the (e.g. components of the) seal are held under compression. This helps to improve the effectiveness of the seal and thus the vacuum in the chamber, owing to the seal forming an effective barrier to the pressure differential formed across the walls of the vacuum chamber from the interior to the exterior of the vacuum chamber, and from the seal expelling air from the seal, e.g. to reduce the risk of electrical breakdown. Thus preferably the first and second walls of the vacuum chamber are arranged to compress the (e.g. components of the) seal. Preferably the weight of the vacuum chamber is arranged to act on the first and second walls of the vacuum chamber to compress the seal. The evacuation of the vacuum chamber to form a vacuum also helps to pull the walls of the vacuum chamber together to compress the seal.

The (e.g. first and second walls of the) vacuum chamber may be made of any suitable and desired material. Preferably the first and second walls of the vacuum chamber are made of metal. This helps to provide strong walls of the vacuum chamber that are compatible with generating a vacuum.

The vacuum chamber (and the seal thereof) may be arranged to form a vacuum inside the vacuum chamber of any suitable and desired level. In one embodiment the vacuum chamber (and the seal thereof) is arranged to form a vacuum of less than 10⁻⁴ mbar. This helps to reduce the risk of electrical breakdown in the vacuum chamber.

The power transmission plates may be provided in any suitable and desired way. Preferably the power transmission plates are (each) substantially planar, particularly as they pass through the seal and the first and second walls of the vacuum chamber. Thus preferably the power transmission plates (each) have a thickness that is substantially smaller than a length and/or a width of the power transmission plates.

The power transmission plates are preferably arranged to pass between the first and second walls of the vacuum chamber such that the thickness of the power transmission plates extends in a direction (e.g. parallel to the direction) between the first and second walls of the vacuum chamber. In other words, the power transmission plates are preferably arranged to pass between the first and second walls of the vacuum chamber such that the thickness of the power transmission plates extends in a direction (e.g. parallel to the direction) across the seal, i.e. parallel to the direction between the first and second outer insulation blocks through the intermediate insulation block.

The first and second power transmission plates may be made from any suitable and desired material. Preferably the first and second power transmission plates are (each) conductive, e.g. made of metal.

The first and second power transmission plates may be arranged to deliver any suitable and desired voltage and/or current to the (e.g. load in the) vacuum chamber. Preferably the first and second power transmission plates are arranged to deliver a (required) high voltage of at least 50 kV, e.g. at least 100 kV, e.g. approximately 200 kV, to the (e.g. load in the) vacuum chamber. The first and second power transmission plates could be arranged such that one of the plates is a ground plate and one of the plates is a positive (or negative) plate (e.g. a live plate). However, preferably the first and second power transmission plates are arranged such that one of the plates is held at a positive voltage and one of the plates is held at a (e.g. equal magnitude) negative voltage.

Preferably the first and second power transmission plates are arranged (e.g. when the voltage is discharged) to deliver a (e.g. high) current to the (e.g. load in the) vacuum chamber.

The seal of the present invention may be used in an electric power feed apparatus for delivering a voltage to a load within a vacuum chamber, wherein the vacuum chamber comprises a first wall and a second wall, the electric power feed apparatus comprising:
a first power transmission plate for extending from the interior of the vacuum chamber to the exterior of the vacuum chamber between the first and second walls of the vacuum chamber;
a second power transmission plate for extending from the interior of the vacuum chamber to the exterior of the vacuum chamber between the first and second walls of the vacuum chamber, wherein the first and second power transmission plates are arranged to deliver a voltage to the load; and
a seal as claimed in claim 1 for sealing between the first and second walls, and between the first and second power transmission plates.

Preferably the electric power feed apparatus comprises a voltage generation system for applying a voltage between the first and second power transmission plates. The electric power feed apparatus preferably comprises a mechanism for discharging the voltage on the first and second power transmission plates to the load in the vacuum chamber.

The vacuum chamber may be used for any suitable and desired use. In one embodiment the vacuum chamber is used as part of a pulsed power (e.g. high energy density physics) apparatus. The seal of the present invention may be used in a pulsed power (e.g. high energy density physics) apparatus comprising:
a vacuum chamber, the vacuum chamber comprising:
   a first wall and a second wall defining the outer surface of the vacuum chamber; and
   a load within the vacuum chamber;
the pulsed power apparatus further comprising:
   a first power transmission plate that extends from the interior of the vacuum chamber to the exterior of the vacuum chamber between the first and second walls of the vacuum chamber;
   a second power transmission plate that extends from the interior of the vacuum chamber to the exterior of the vacuum chamber between the first and second walls of the vacuum chamber, wherein the first and second power transmission plates are arranged to deliver a voltage to the load;
   a voltage generation system for applying a voltage between the first and second power transmission plates; and
   a seal as claimed in claim 1 for sealing between the first and second walls, and between the first and second power transmission plates.

The voltage generation system preferably comprises one or more capacitors arranged to be charged for applying the voltage to the first and second power transmission plates. The pulsed power apparatus preferably comprises a mechanism for discharging the voltage on the first and second power transmission plates to the load in the vacuum chamber.

The first and second outer insulation blocks, and the intermediate insulation block, may be provided in any suitable and desired way, to seal against the walls of the vacuum chamber, and the power transmission plates. Preferably the first outer insulation block comprises mating surfaces for sealing against (and between) the first wall of the vacuum chamber and the first power transmission plate. Preferably the second outer insulation block comprises mating surfaces for sealing against (and between) the second wall of the vacuum chamber and the second power transmission plate. Preferably the intermediate insulation block comprises mating surfaces for sealing against (and between) the first and second power transmission plates.

The mating surfaces are preferably shaped to match the shape of the surfaces of the walls of the vacuum chamber, and the power transmission plates, against which they are sealing. Preferably the mating surfaces are (e.g. each) substantially planar. This helps to form a good seal between the insulation blocks and the walls of the vacuum chamber, and the power transmission plates.

In one embodiment the seal comprises a compressible (e.g. dielectric) material (e.g. layer) between the (e.g. mating surfaces of the) insulation blocks and the respective components they are sealing against. The compressible material helps to provide an air-tight seal between the components that the insulation blocks are sealing against, which may help to generate a better seal for the vacuum chamber and thus help to generate a more effective vacuum. The compressible material between the insulation blocks and the respective components they are sealing against also helps to reduce the risk of surface tracking across the insulation blocks from the interior to the exterior of the vacuum chamber (or vice versa) through the seal.

Preferably the compressible material is arranged to be compressed between the (e.g. mating surfaces of) the insulation blocks and the respective components they are sealing against, e.g. when the seal is put under compression.

The compressible material may be provided in any suitable and desired way. In one embodiment one or more (e.g. any combination or all of) the mating surfaces of (e.g. each of) the insulation blocks comprise one or more grooves, wherein the compressible material is arranged in (e.g. each of) the grooves. Preferably the compressible material comprises a gasket, e.g. a linear cord or an O-ring.

The mating surfaces of the insulation blocks may comprise any suitable number of grooves into which the compressible material is placed. In one embodiment (e.g. each) mating surface comprises only a single groove. Preferably the grooves in the mating surfaces are offset from each other. Thus preferably the groove in a mating surface is offset from (e.g. closer to the interior or exterior of the vacuum chamber) the groove in an adjacent mating surface. For example, the groove in the mating surface of first outer insulation block that seals against the first power transmission plate is preferably offset from the groove in the mating surface of the intermediate insulation block that seals against the first power transmission plate.

The first and second outer insulation blocks, and the intermediate insulation block, may be made from any suitable and desired (dielectric) material. Preferably the first and second outer insulation blocks, and the intermediate insulation block, (e.g. each) comprise a solid (e.g. substantially incompressible, e.g. rigid) block. Preferably the first and second outer insulation blocks, and the intermediate insulation block, (e.g. each) comprise a (e.g. thermoplastic) polymer, e.g. high-density polyethylene (HDPE). Preferably the dielectric strength of (e.g. each of) the first and second outer insulation blocks, and the intermediate insulation block, is greater than 10 kV/mm, e.g. greater than 20 kV/mm, e.g. approximately 22 kV/mm.

The first and second outer insulation blocks, and the intermediate insulation block, may have any suitable and desired dimensions. For example, the dimensions of the insulation blocks may depend on one or more (e.g. all) of the dimensions of the walls of the vacuum chamber, the dimensions of the power transmission plates and the voltages carried by the power transmission plates. The dimension of (e.g. each of) the first and second outer insulation blocks, and the intermediate insulation block, in a (e.g. radial) direction across the walls of the vacuum chamber may be greater than or equal to the dimension of the first and second walls of the vacuum chamber in a direction across the walls of the vacuum chamber.

The dimension (thickness) of the intermediate insulation block in a direction (e.g. parallel to the direction) between the first and second walls of the vacuum chamber may be greater than the ratio of the voltage across the power transmission plates to the dielectric strength of the intermediate insulation block, e.g. at least twice the ratio of the voltage across the power transmission plates to the dielectric strength of the intermediate insulation block. Thus, when the intermediate insulation block is made from HDPE (having a dielectric strength of 22 kV/mm) and the voltage across the pair of power transmission plates is 200 kV, the thickness of the intermediate insulation block may be 18 mm (i.e. giving a safety factor of two).

The first and second outer insulation blocks may have any suitable and desired shape for being held against (e.g. attached to) the first and second walls of the vacuum chamber respectively. For example, the mating surface of the outer insulation blocks for sealing against the respective wall of the vacuum chamber may extend all the way across the outer insulation blocks. However, in a preferred embodiment, the first and second outer insulation blocks are shaped to extend up the sides of the first and second walls of the vacuum chamber respectively. Thus preferably the first and second outer insulation blocks are U-shaped.

The slots in the sides of the intermediate insulation block for receiving the insulation sheets may be provided in any suitable and desired way. Preferably the slots are arranged such that the ends of multiple (e.g. sets of) insulation sheets sandwich part(s) of the sides of the intermediate insulation block and/or multiple parts of the sides of the intermediate insulation block sandwich the end(s) of the insulation sheet(s). This helps to increase the path length around the edges of the intermediate insulation block and the ends of the insulation sheet(s), which thus helps to reduce the risk of surface tracking along this path between the power transmission plates.

Preferably the one or more slots (e.g. each) extend in a (e.g. radial) direction across the walls of the vacuum chamber (i.e. between the interior and the exterior of the vacuum chamber). Thus preferably the one or more slots formed on the interior side of the intermediate insulation block preferably extend in a direction towards the interior of the vacuum chamber. Preferably the one or more slots formed on the exterior side of the intermediate insulation block preferably extend in a direction towards the exterior of the vacuum chamber. When the intermediate insulation block comprises a plurality of slots, preferably the slots extend in respective parallel directions.

The intermediate insulation block may comprise any suitable and desired number of slots on each side. Preferably the intermediate insulation block comprises the same number of slots on the interior side as on the exterior side. The number of slots provided in (e.g. each side of) the intermediate insulation block may be a trade-off between the depth and number of the slots (and thus the set(s) of insulation sheet(s)), e.g. in order to increase the path length around the edges of the intermediate insulation block and the insulation sheet(s). Preferably the intermediate insulation block comprises at least two (e.g. three) slots formed in the first side. Preferably the intermediate insulation block comprises at least two (e.g. three) slots formed in the second side. When the intermediate insulation block comprises a plurality of slots formed in the first and/or second sides, preferably the slots (e.g. on the first and/or second sides) have substantially the same depth into the intermediate insulation block.

In one embodiment the intermediate insulation block comprises one or more slots formed in one or more edges of the first side and/or one or more slots formed in one or more edges of the second side. Preferably the edges of the first side and the second side of the intermediate insulation block (e.g. each) are adjacent to (and, e.g., face) the first and second power transmission plates respectively. Thus preferably the one or more insulation sheets arranged in these edge slots are sandwiched (e.g. clamped) between the intermediate insulation block and the respective power transmission plate. It will thus be appreciated that preferably the edge slots are adjacent to (e.g. arranged either side of) the mating surfaces of the intermediate insulation block.

Preferably the one or more edge slots are formed as a step or taper in the intermediate insulation block. Providing a step may help to form a stop in the edge slots for the insulation sheet(s) to abut. Preferably the edge slots extend from the mating surfaces of the intermediate insulation block.

Preferably the mating surface(s) of the intermediate insulation block (e.g. each) have a dimension in a (e.g. radial) direction across the walls of the vacuum chamber that is substantially equal to the dimension in a (e.g. radial) direction across the walls of the vacuum chamber of the mating surface of the adjacent outer insulation block. Thus preferably the dimension of the intermediate insulation block (e.g. including the part(s) in which the one or more slots are formed) in a (e.g. radial) direction across the walls of the vacuum chamber is greater than the dimension of the first and/or second insulation blocks in a (e.g. radial) direction across the walls of the vacuum chamber.

In one embodiment the intermediate insulation block comprises one or more slots formed away from the edges (e.g. in a central region) of the first side and/or the second side. In this embodiment, these central slot(s) have parts of the intermediate insulation block on each side of the slot(s). Thus preferably the one or more insulation sheets arranged in these central slot(s) are sandwiched (e.g. clamped) between (e.g. projecting) parts of the intermediate insulation block.

It will be appreciated that the intermediate insulation block may comprise any suitable and desired arrangement of slots, e.g. of edge slot(s) and/or central slot(s). However, in a preferred embodiment the intermediate insulation block comprises two slots formed in the two edges of the first side (i.e. adjacent to the power transmission plates), a central slot formed in the first side, two slots formed in the two edges of the second side (i.e. adjacent to the power transmission plates), and a central slot formed in the second side.

The intermediate insulation block may be formed as a single, integral piece of material. However, in some embodiments, e.g. when the intermediate insulation block comprises a plurality of slots in (e.g. each of) the first and second sides, the intermediate insulation block comprises a plurality of sub-blocks, wherein at least one of the one or more (e.g. plurality of) (e.g. central) slots are formed between (e.g. each of) the plurality of sub-blocks, e.g. when the plurality of sub-blocks are placed together.

Forming the intermediate insulation block from two or more sub-blocks may help to manufacture the intermediate insulation block. This is because it may not be necessary to form the slot(s) away from the edges of the intermediate insulation block as cavities in the intermediate insulation block (i.e. with the slot(s) surrounded on both sides), owing to these slot(s) being formed between the sub-blocks. It will be appreciated that if the intermediate insulation block were to have one or more slots formed away from its edges as cavities, this may be difficult to form as a single block, owing to the physical geometry (in at least preferred embodiments) of the (e.g. relatively large radius and thin) projecting parts of the intermediate insulation block between or to the side of the one or more slots. Thus, preferably one or more (e.g. each) of the sub-blocks comprise one or more slots formed in one or more edges of the first side of the sub-blocks and/or one or more slots formed in one or more edges of the second side of the sub-blocks.

Preferably the (e.g. each of the) sub-blocks comprise (internal) mating surfaces for sealing against another of the sub-blocks. Thus preferably two sub-blocks comprise respective (internal) mating surfaces that seal against each other (as well, for example, as the (external) mating surface for sealing against the power transmission plate). In one embodiment one or more (e.g. any combination or all) of the mating surfaces of (e.g. each of) the sub-blocks comprise one or more grooves, wherein a compressible material is arranged in (e.g. each of) the grooves. Preferably the compressible material comprises a gasket, e.g. a linear cord or an O-ring. Preferably the grooves of adjacent mating surfaces of the sub-blocks are offset from each other (e.g. in the manner outlined above for the insulation blocks).

The one or more (e.g. central) slots away from the edges of the intermediate block may have any suitable and desired shape. As with the edge slots, the central slots may be stepped (e.g. rectangular). However, in a preferred embodiment the central slots are tapered (e.g. widening towards the opening of the slots at the face of the first or second side, as appropriate). This helps to insert the one or more insulation sheets into the slots (e.g. owing to the wider opening) and helps to retain the insulation sheet(s) in the slots (e.g. owing to the narrower end of the slots). The tapering slots also help to reduce the thickness of material of the intermediate insulation block towards the sides of the intermediate insulation block. This helps to increase the bulk insulation of the seal where the insulation sheet(s) end and the risk of dielectric breakdown may be increased.

The one or more slots (and thus the overlap between the intermediate insulation block and the one or more insulation sheets) may have any suitable and desired depth (e.g. in a direction towards the interior or exterior (as appropriate) of the vacuum chamber). In one embodiment the one or more slots have a depth greater than 5 cm, e.g. greater than 8 cm, e.g. approximately 10 cm. The depth of the one or more slots is preferably greater than tracking distance which the seal is defending against. When there are fewer slots, the one or more slots may have a greater depth. When there are greater slots, the slots may be able to have a lesser depth.

The one or more (interior and exterior) insulation sheets may be provided in any suitable way in the one or more slots of the intermediate insulation block. Preferably the seal comprises the same number of sets of one or more insulation sheets as the number of slots in the intermediate insulation block, such that there are one or more insulation sheets extending from each of the one or more slots. Thus, preferably the seal comprises at least two (e.g. three) sets of one or more interior insulation sheets for extending between the first and second power transmission plates on the interior of the vacuum chamber, wherein the at least two (e.g. three) sets of one or more interior insulation sheets are arranged in the at least two (e.g. three) sets of slots in the first side of the intermediate insulation block.

Similarly, preferably the seal comprises at least two (e.g. three) sets of one or more exterior insulation sheets for extending between the first and second power transmission plates on the exterior of the vacuum chamber, wherein the at least two (e.g. three) sets of one or more exterior insulation sheets are arranged in the at least two (e.g. three) sets of slots in the second side of the intermediate insulation block. As with the multiple slots on (e.g. each side of) the intermediate insulation block, providing multiple sets of insulation sheets helps to increase the insulation between the power transmission plates and helps to increase the path length between them, which reduces the risk of surface tracking between the plates.

In a preferred embodiment the seal comprises a plurality of insulation sheets in (e.g. each of) the one or more slots of the intermediate insulation block. The plurality of insulation sheets in (e.g. each) set of insulation sheets preferably comprises at least ten insulation sheets, e.g. at least fifteen insulation sheets, e.g. at least twenty insulation sheets. Providing multiple sheets in each set of insulation sheets helps to increase the amount of insulation between the power transmission plates. Preferably the plurality of insulation sheets are distributed equally between the one or more slots of the intermediate insulation block.

The (interior and exterior) insulation sheets may have any suitable and desired geometry. Preferably (e.g. each of) the one or more insulation sheets have a thickness (in a direction (e.g. parallel to the direction) between the first and second walls of the vacuum chamber) less than 200 microns, e.g. less than 100 microns, e.g. approximately 75 microns. A greater number of thinner sheets offers greater protection against electrical breakdown. Thinner sheets are, however, more susceptible to mechanical damage, so a balance between the number of sheets and their thickness may be provided to achieve a particular dielectric strength.

Preferably the (interior and exterior) insulation sheets extend from the slot(s) of the intermediate insulation block into the (interior and exterior of the) vacuum chamber between the power transmission plates over a significantly greater distance than the depth of the slot(s) of the intermediate insulation block. This means that the insulation sheets provide the significant majority of the insulation between the power transmission plates, which helps to reduce the inductance between the power transmission plates.

When the seal extends around the perimeter of the vacuum chamber, e.g. such that the insulation sheets extend around the perimeter of the vacuum chamber, each insulation sheet may extend continuously around the perimeter. However, the seal may comprise a plurality of overlapping insulation sheets arranged in (e.g. each of) the one or more slots, wherein each of the insulation sheets of the plurality of overlapping insulation sheets extends around less than the perimeter of the vacuum chamber and at least one (e.g. an adjacent one) of the plurality of overlapping insulation sheets extends around a portion of the perimeter that is common with at least another of the plurality of overlapping insulation sheets. Such overlapping insulation sheets may comprise overlapping interior insulation sheets and/or overlapping exterior insulation sheets.

The plurality of overlapping insulation sheets may be arranged in any suitable and desired configuration. Each of the insulation sheets of the plurality of overlapping insulation sheets may extend around half of the perimeter of the vacuum chamber. Preferably (e.g. each pair of) adjacent insulation sheets in the plurality of overlapping insulation sheets overlap over approximately a sixth of the perimeter of the vacuum chamber, e.g. over an angle (e.g. subtended about the centre of the vacuum chamber) of approximately 60 degrees around the perimeter of the vacuum chamber. Thus preferably three adjacent insulation sheets are arranged (e.g. equally spaced) around the perimeter of the vacuum chamber to provide two overlapping layers of insulation sheets.

The interior and exterior insulation sheet(s) may be made from any suitable and desired (dielectric) material, e.g. a thin film. In a preferred embodiment the interior and exterior insulation sheet(s) are made from a polyester, e.g. biaxially-oriented polyethylene terephthalate (boPET) such as Mylar (RTM).

The (e.g. components of the) seal may be arranged to provide any suitable and desired (e.g. reduced, e.g. minimised) inductance. In one embodiment the seal has an inductance of less than 10 nH, e.g. less than 5 nH, e.g. less than 3 nH. Such values of the inductance of the seal helps a high voltage with a fast discharge to be delivered to (e.g. a load in) the vacuum chamber by the power transmission plates.

A preferred embodiment for the invention will now be described, by way of example only, with reference to the accompanying drawings in which:
Figure 1 shows schematically a pulsed power apparatus according to an embodiment of the present invention;
Figure 2 shows a cross section of an electric power feed apparatus according to an embodiment of the present invention; and
Figure 3 shows a set of insulation sheets, in accordance with an embodiment of the present invention, for use in the electric power feed apparatus shown in Figure 2.

An embodiment of the invention, which provides a vacuum chamber for use in a pulsed power (e.g. high energy density physics) apparatus will now be described. Such a pulsed power apparatus requires a high voltage power supply to be fed into a vacuum chamber, for delivering a high voltage pulse to a load in the vacuum chamber. In order to maintain an effective vacuum in the vacuum chamber, a good seal around where the power supply enters the vacuum chamber needs to be provided. An effective vacuum helps to reduce the risk of electrical breakdown in the vacuum chamber. As will be described, the seal according to an embodiment of the present invention helps to minimise the inductance that results from the insulation of the seal between the power transmission plates of the power supply.

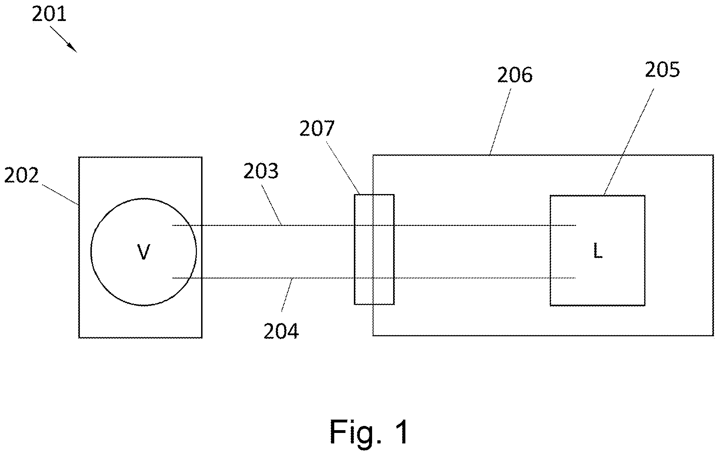

Figure 1 shows a pulsed power apparatus 201 according to an embodiment of the present invention. The pulsed power apparatus 201 includes a voltage generation system 202 that is arranged to apply a voltage, V, between a pair of power transmission plates 203, 204. The power transmission plates 203, 204 are arranged to deliver the voltage to a load 205 in a vacuum chamber 206. The vacuum chamber 206 has a seal 207 where the power transmission plates 203, 204 pass through the walls of the vacuum chamber 206.

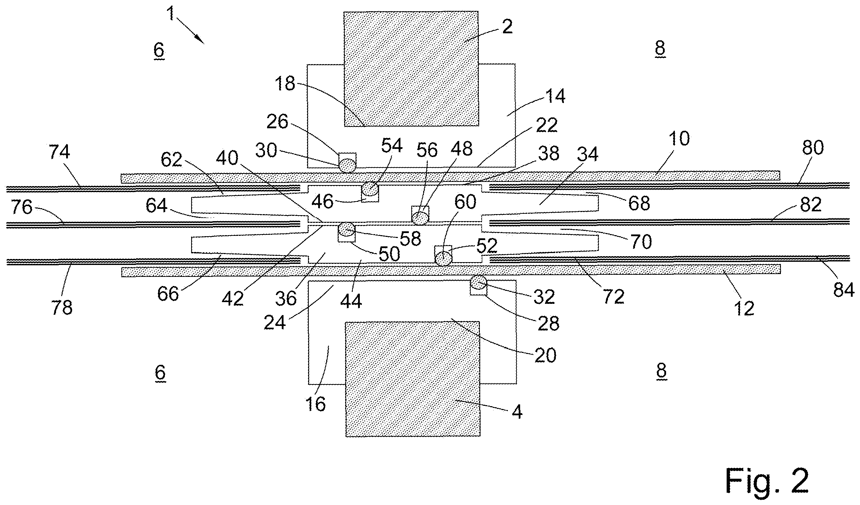

Figure 2 shows an electric power feed apparatus 1 for a vacuum chamber according to an embodiment of the present invention, e.g. for use in the pulsed power apparatus 201 shown in Figure 1. Figure 2 shows a cross section through the walls 2, 4 of a vacuum chamber, which, with the electric power feed apparatus 1, extend around the perimeter of the vacuum chamber. The walls 2, 4 of the vacuum chamber thus define the boundary between the interior 6 and the exterior 8 of the vacuum chamber.

The electric power feed apparatus 1 includes a seal for sealing the gap between the walls 2, 4 of the vacuum chamber, through which a pair of electric power transmission plates 10, 12 passes. The power transmission plates 10, 12 are arranged to deliver a high voltage to a load inside the vacuum chamber.

The electric power feed apparatus 1 includes two U-shaped outer insulation blocks 14, 16 that fit around the edges of the walls 2, 4 of the vacuum chamber. The outer insulation blocks 14, 16 each have a planar mating surface 18, 20 that seals against the respective edge of the walls 2, 4 of the vacuum chamber. The outer insulation blocks 14, 16 also each have a planar mating surface 22, 24 that seals against the respective power transmission plates 10, 12. A groove 26, 28 is defined in each of the planar mating surfaces 22, 24 that face the power transmission plates 10, 12 and an O-ring 30, 32 is located in each groove 26, 28.

An intermediate insulation block, formed from two sub-blocks 34, 36, is sandwiched between the two power transmission plates 10, 12. Each sub-block 34, 36 has a planar mating surface 38, 40, 42, 44 on either side, the outer mating surfaces 38, 44 for sealing against the power transmission plates 10, 12, the inner mating surfaces 40, 42 for sealing against each other. A groove 46, 48, 50, 52 is defined in each mating surface 38, 40, 42, 44 and an O-ring 54, 56, 58, 60 is located in each groove 46, 48, 50, 52. As can be seen from Figure 2, the grooves 26, 28, 46, 48, 50, 52 (and thus the O-rings 30, 32, 54, 56, 58, 60) are offset from each other in the mating surfaces 22, 24, 38, 40, 42, 44 that are adjacent to each other.

The sub-blocks 34, 36 of the intermediate insulation block extend further out than the outer insulation blocks 14, 16, with the edges of the sub-blocks 34, 36 being tapered. This tapering of the sub-blocks 34, 36 forms three slots 62, 64, 66, 68, 70, 72 on either side of the intermediate insulation block. A set of 20 Mylar (RTM) insulation sheets 74, 76, 78, 80, 82, 84 are located in each of the slots 62, 64, 66, 68, 70, 72, such that three sets of insulation sheets 74, 76, 78, extend into the interior 6 of the vacuum chamber and three sets of insulation sheets 80, 82, 84 extend to the exterior 8 of the vacuum chamber between the power transmission plates 10, 12.

In the interior 6 of the vacuum chamber, the power transmission plates 10, 12 are brought closer together than their spacing at the walls 2, 4 of the vacuum chamber and extend to a load (not shown) at the centre of the vacuum chamber. At the exterior 8 of the vacuum chamber, the power transmission plates 10, 12 are brought closer together than their spacing at the walls 2, 4 of the vacuum chamber and extend to a voltage generation system (e.g. as shown in Figure 1) for charging the power transmission plates 10, 12 to a high voltage.

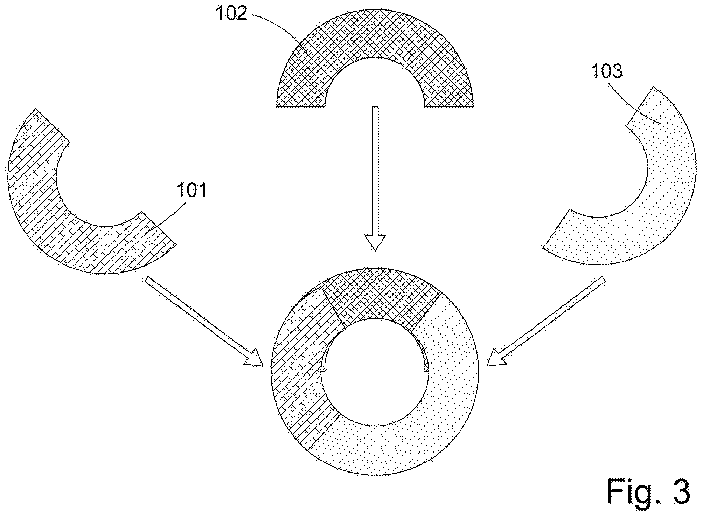

Figure 3 shows a configuration of a set of insulation sheets, in accordance with an embodiment of the present invention, for use in the electric power feed apparatus 1 shown in Figure 2. The insulation sheets 101, 102, 103 shown in Figure 3 may form any one of the sets of insulation sheets 74, 76, 78, 80, 82, 84 in the electric power feed apparatus 1 shown in Figure 2. Thus, each layer in the sets of insulation sheets 74, 76, 78, 80, 82, 84 (of which there may be twenty layers, for example) may be made up of three insulation sheets 101, 102, 103.

Figure 3 shows that the insulation sheets 101, 102, 103 each extend around half of the perimeter of the vacuum chamber. The insulation sheets 101, 102, 103 in the set each overlap the adjacent insulation sheet by approximately 60 degrees.

In operation, the vacuum chamber and the electric power feed apparatus is assembled as shown in Figures 1 and 2. The power transmission plates 10, 12 are charged to a high voltage (e.g. ± 100 kV) by a voltage generation system connected to the power transmission plates 10, 12. The seal between the power transmission plates 10, 12 and between the walls 2, 4 of the vacuum chamber act to insulate the power transmission plates 10, 12 from each other and from the walls 2, 4 of the vacuum chamber. This helps to allow the power transmission plates 10, 12 to be charged to the high voltage and to be kept at the high voltage without the risk of electrical breakdown. The high voltage is then discharged to the load in the vacuum chamber, e.g. as part of the pulsed power system shown in Figure 1.

It will be seen from the above that, in at least preferred embodiments, the vacuum chamber seal of the present invention provides an effective seal between the walls of the vacuum and the pair of power transmission plates, owing to the solid insulation blocks. The insulation sheets of the seal help to allow the pair of power transmission plates to be brought closer together, thus helping to reduce the inductance between the pair of power transmission plates, while still providing sufficient insulation between them, e.g. to protect against electrical punch through, even when subject to a high electric field gradient. Thus the seal of the present invention exploits the beneficial properties of both the insulation blocks (i.e. a good seal) and the insulation plates (i.e. low inductance).

The transition between the insulation sheets and the insulation blocks, via the slots, helps to reduce the extent of the insulation blocks, which also helps to reduce the inductance between the pair of power transmission plates, while still allowing a good seal to be provided and insulating the power transmission plates from each other. This helps to allow the power transmission plates to deliver a high voltage and current into the load in the vacuum chamber at a high discharge rate. The slots in the intermediate insulation block also help to increase the path length between the power transmission plates. This helps to reduce the risk of electrical breakdown owing to surface tracking.

## Claims

1. A seal for a vacuum chamber, wherein the vacuum chamber comprises a first wall (2) and a second wall (4), the seal comprising:
a first outer insulation block (14) for sealing between the first wall of the vacuum chamber and a first power transmission plate (10) that extends from the interior of the vacuum chamber to the exterior of the vacuum chamber between the first and second walls of the vacuum chamber;
a second outer insulation block (16) for sealing between the second wall of the vacuum chamber and a second power transmission plate (12) that extends from the interior of the vacuum chamber to the exterior of the vacuum chamber between the first and second walls of the vacuum chamber;
wherein the seal is **characterised by**:
an intermediate insulation block (34, 36) for sealing between the first and second power transmission plates, wherein the intermediate insulation block comprises one or more slots formed in a first side of the intermediate insulation block for facing the interior of the vacuum chamber and one or more slots formed in a second side of the intermediate insulation block for facing the exterior of the vacuum chamber;
one or more interior insulation sheets (74, 76, 78) for extending between the first and second power transmission plates on the interior of the vacuum chamber, wherein the one or more interior insulation sheets are arranged in the one or more slots (62, 64, 66) in the first side of the intermediate insulation block; and
one or more exterior insulation sheets (80, 82, 84) for extending between the first and second power transmission plates on the exterior of the vacuum chamber, wherein the one or more exterior insulation sheets are arranged in the one or more slots (68, 70, 72) in the second side of the intermediate insulation block.

2. The seal as claimed in claim 1 , wherein the first outer insulation block comprises mating surfaces for sealing against the first wall of the vacuum chamber and the first power transmission plate, wherein the second outer insulation block comprises mating surfaces for sealing against the second wall of the vacuum chamber and the second power transmission plate, and wherein the intermediate insulation block comprises mating surfaces for sealing against the first and second power transmission plates.

3. The seal as claimed in claim 2, wherein the mating surfaces of each of the insulation blocks comprises one or more grooves, wherein a compressible material is arranged in each of the grooves.

4. The seal as claimed in claim 3, wherein the grooves in the mating surfaces are offset from each other.

5. The seal as claimed in claim 2, 3, or 4, wherein the mating surfaces of the intermediate insulation block have a dimension in a direction across the walls of the vacuum chamber that is substantially equal to the dimension in a direction across the walls of the vacuum chamber of the mating surface of the adjacent outer insulation block, and optionally wherein the first and second outer insulation blocks, and the intermediate insulation block comprise a polymer, e.g. high-density polyethylene.

6. The seal as claimed in any one of the preceding claims, wherein the intermediate insulation block comprises at least two slots formed in the first side of the intermediate insulation block, and wherein the intermediate insulation block comprises at least two slots formed in the second side of the intermediate insulation block, and optionally wherein the intermediate insulation block comprises one or more slots formed in one or more edges of the first side adjacent to the first power transmission plate and/or one or more slots formed in one or more edges of the second side adjacent to the second power transmission plate, and wherein the one or more edge slots are formed as a step or taper in the intermediate insulation block.

7. The seal as claimed in any one of the preceding claims, wherein the intermediate insulation block comprises one or more slots formed away from the edges of the first side and/or the second side of the intermediate insulation block.

8. The seal as claimed in any one of the preceding claims, wherein the intermediate insulation block comprises a plurality of sub-blocks, wherein at least one of the one or more slots are formed between the plurality of sub-blocks, and wherein one or more of the sub-blocks comprise one or more slots formed in one or more edges of the first side of the sub-blocks and/or one or more slots formed in one or more edges of the second side of the sub-blocks, and optionally wherein the sub-blocks comprise mating surfaces for sealing against another of the sub-blocks, wherein one or more of the mating surfaces of the sub-blocks comprise one or more grooves, wherein a compressible material is arranged in the grooves.

9. The seal as claimed in any one of the preceding claims, wherein the seal comprises a plurality of insulation sheets in each of the one or more slots of the intermediate insulation block.

10. The seal as claimed in any one of the preceding claims, wherein the one or more interior and exterior insulation sheets are made from a polyester, e.g. biaxially-oriented polyethylene terephthalate, and optionally wherein the seal has an inductance of less than 10 nH, e.g. less than 5 nH, e.g. less than 3 nH.

11. A vacuum chamber comprising:
a first wall and a second wall defining the outer surface of the vacuum chamber;
a load within the vacuum chamber;
a first power transmission plate that extends from the interior of the vacuum chamber to the exterior of the vacuum chamber between the first and second walls of the vacuum chamber;
a second power transmission plate that extends from the interior of the vacuum chamber to the exterior of the vacuum chamber between the first and second walls of the vacuum chamber, wherein the first and second power transmission plates are arranged to deliver a voltage to the load; and
a seal as claimed in claim 1 sealing between the first and second walls and between the first and second power transmission plates.

12. An electric power feed apparatus for delivering a voltage to a load within a vacuum chamber, wherein the vacuum chamber comprises a first wall and a second wall, the electric power feed apparatus comprising:
a first power transmission plate for extending from the interior of the vacuum chamber to the exterior of the vacuum chamber between the first and second walls of the vacuum chamber;
a second power transmission plate for extending from the interior of the vacuum chamber to the exterior of the vacuum chamber between the first and second walls of the vacuum chamber, wherein the first and second power transmission plates are arranged to deliver a voltage to the load; and
a seal as claimed in claim 1 sealing between the first and second walls and between the first and second power transmission plates.

13. A pulsed power apparatus comprising:
a vacuum chamber, the vacuum chamber comprising:
a first wall and a second wall defining the outer surface of the vacuum chamber; and
a load within the vacuum chamber;
the pulsed power apparatus further comprising:
a first power transmission plate that extends from the interior of the vacuum chamber to the exterior of the vacuum chamber between the first and second walls of the vacuum chamber;
a second power transmission plate that extends from the interior of the vacuum chamber to the exterior of the vacuum chamber between the first and second walls of the vacuum chamber, wherein the first and second power transmission plates are arranged to deliver a voltage to the load;
a voltage generation system for applying a voltage between the first and second power transmission plates; and
a seal as claimed in claim 1 sealing between the first and second walls, and between the first and second power transmission plates.

## Patentansprüche

1. Dichtung für eine Vakuumkammer, wobei die Vakuumkammer eine erste Wand (2) und eine zweite Wand (4) umfasst, wobei die Dichtung umfasst:
einen ersten äußeren Isolierblock (14) zum Abdichten zwischen der ersten Wand der Vakuumkammer und einer ersten Leistungsübertragungsplatte (10), die sich vom Inneren der Vakuumkammer zum Äußeren der Vakuumkammer zwischen der ersten und zweiten Wand der Vakuumkammer erstreckt;
einen zweiten äußeren Isolierblock (16) zum Abdichten zwischen der zweiten Wand der Vakuumkammer und einer zweiten Leistungsübertragungsplatte (12), die sich vom Inneren der Vakuumkammer zum Äußeren der Vakuumkammer zwischen der ersten und zweiten Wand der Vakuumkammer erstreckt;
wobei die Dichtung **gekennzeichnet ist durch**:
einen Zwischenisolierblock (34, 36) zum Abdichten zwischen der ersten und zweiten Leistungsübertragungsplatte, wobei der Zwischenisolierblock einen oder mehrere Schlitze, die in einer ersten Seite des Zwischenisolierblocks gebildet sind, um dem Inneren der Vakuumkammer zugewandt zu sein, und einen oder mehrere Schlitze umfasst, die in einer zweiten Seite des Zwischenisolierblocks gebildet sind, um dem Äußeren der Vakuumkammer zugewandt zu sein;
eine oder mehrere innere Isolierplatten (74, 76, 78) zum Erstrecken zwischen der ersten und zweiten Leistungsübertragungsplatte im Inneren der Vakuumkammer, wobei die eine oder mehrere inneren Isolierplatten in dem einen oder mehreren Schlitzen (62, 64, 66) in der ersten Seite des Zwischenisolierblocks angeordnet sind; und
eine oder mehrere äußere Isolierplatten (80, 82, 84) zum Erstrecken zwischen der ersten und zweiten Leistungsübertragungsplatte an der Außenseite der Vakuumkammer, wobei die eine oder mehrere äußere Isolierplatten in dem einen oder mehreren Schlitzen (68, 70, 72) in der zweiten Seite des Zwischenisolierblocks angeordnet sind.

2. Dichtung nach Anspruch 1, wobei der erste äußere Isolierblock Passoberflächen zum Abdichten an der ersten Wand der Vakuumkammer und der ersten Leistungsübertragungsplatte umfasst, wobei der zweite äußere Isolierblock Passoberflächen zum Abdichten an der zweiten Wand der Vakuumkammer und der zweiten Leistungsübertragungsplatte umfasst, und wobei der Zwischenisolierblock Passoberflächen zum Abdichten an der ersten und zweiten Leistungsübertragungsplatte umfasst.

3. Dichtung nach Anspruch 2, wobei die Passoberflächen jedes der Isolierblöcke eine oder mehrere Nuten umfassen, wobei in jeder der Nuten ein komprimierbares Material angeordnet ist.

4. Dichtung nach Anspruch 3, wobei die Nuten in den Passoberflächen voneinander versetzt sind.

5. Dichtung nach Anspruch 2, 3 oder 4, wobei die Passoberflächen des Zwischenisolierblocks in einer Richtung über die Wände der Vakuumkammer eine Abmessung aufweisen, die im Wesentlichen gleich der Abmessung in einer Richtung über die Wände der Vakuumkammer der Passoberfläche des angrenzenden äußeren Isolierblocks ist, und wobei der erste und zweite äußere Isolierblock und der Zwischenisolierblock optional ein Polymer, z. B. hochdichtes Polyethylen, umfassen.

6. Dichtung nach einem der vorstehenden Ansprüche, wobei der Zwischenisolierblock mindestens zwei Schlitze umfasst, die in der ersten Seite des Zwischenisolierblocks gebildet sind, und wobei der Zwischenisolierblock mindestens zwei Schlitze umfasst, die in der zweiten Seite des Zwischenisolierblocks gebildet sind, und wobei der Zwischenisolierblock optional einen oder mehrere Schlitze umfasst, die in einer oder mehreren Kanten der ersten Seite an die erste Leistungsübertragungsplatte angrenzend gebildet sind, und/oder einen oder mehrere Schlitze, die in einer oder mehreren Kanten der zweiten Seite an die zweite Leistungsübertragungsplatte angrenzend gebildet sind, und wobei der eine oder die mehreren Kantenschlitze als Stufe oder Verjüngung in dem Zwischenisolierblock gebildet sind.

7. Dichtung nach einem der vorstehenden Ansprüche, wobei der Zwischenisolierblock einen oder mehrere Schlitze umfasst, die von den Kanten der ersten Seite und/oder der zweiten Seite des Zwischenisolierblocks weg gebildet sind.

8. Dichtung nach einem der vorstehenden Ansprüche, wobei der Zwischenisolierblock eine Vielzahl von Teilblöcken umfasst, wobei mindestens einer des einen oder mehrerer Schlitze zwischen der Vielzahl von Teilblöcken gebildet ist, und wobei einer oder mehrere der Teilblöcke einen oder mehrere Schlitze umfassen, die in einer oder mehreren Kanten der ersten Seite der Teilblöcke gebildet sind, und/oder einen oder mehrere Schlitze, die in einer oder mehreren Kanten der zweiten Seite der Teilblöcke gebildet sind, und wobei die Teilblöcke optional Passoberflächen zum Abdichten an einem anderen der Teilblöcke umfassen, wobei eine oder mehrere der Passoberflächen der Teilblöcke eine oder mehrere Nuten umfassen, wobei komprimierbares Material in den Nuten angeordnet ist.

9. Dichtung nach einem der vorstehenden Ansprüche, wobei die Dichtung eine Vielzahl von Isolierplatten in jedem des einen oder mehrerer Schlitze des Zwischenisolierblocks umfasst.

10. Dichtung nach einem der vorstehenden Ansprüche, wobei die eine oder mehrere innere und äußere Isolierplatten aus einem Polyester, z. B. biaxial ausgerichtetem Polyethylenterephthalat, hergestellt sind, und wobei die Dichtung optional eine Induktivität von weniger als 10 nH, z. B. weniger als 5 nH, z. B. weniger als 3 nH aufweist.

11. Vakuumkammer, umfassend:
eine erste Wand und eine zweite Wand, die die Außenoberfläche der Vakuumkammer definieren;
eine Last innerhalb der Vakuumkammer;
eine erste Leistungsübertragungsplatte, die sich vom Inneren der Vakuumkammer zum Äußeren der Vakuumkammer zwischen der ersten und zweiten Wand der Vakuumkammer erstreckt;
eine zweite Leistungsübertragungsplatte, die sich vom Inneren der Vakuumkammer zum Äußeren der Vakuumkammer zwischen der ersten und der zweiten Wand der Vakuumkammer erstreckt, wobei die erste und die zweite Leistungsübertragungsplatte angeordnet sind, um der Last eine Spannung zuzuführen; und
eine Dichtung nach Anspruch 1, die zwischen der ersten und zweiten Wand und zwischen der ersten und zweiten Leistungsübertragungsplatte abdichtet.

12. Elektrische Stromversorgungseinrichtung zum Zuführen von Spannung zu einer Last innerhalb einer Vakuumkammer, wobei die Vakuumkammer eine erste Wand und eine zweite Wand umfasst, und die elektrische Stromversorgungseinrichtung umfasst:
eine erste Leistungsübertragungsplatte zum Erstrecken vom Inneren der Vakuumkammer zum Äußeren der Vakuumkammer zwischen der ersten und zweiten Wand der Vakuumkammer;
eine zweite Leistungsübertragungsplatte zum Erstrecken vom Inneren der Vakuumkammer zum Äußeren der Vakuumkammer zwischen der ersten und der zweiten Wand der Vakuumkammer erstreckt, wobei die erste und die zweite Leistungsübertragungsplatte angeordnet sind, um der Last eine Spannung zuzuführen; und
eine Dichtung nach Anspruch 1, die zwischen der ersten und zweiten Wand und zwischen der ersten und zweiten Leistungsübertragungsplatte abdichtet.

13. Einrichtung mit gepulster Leistung, umfassend:
eine Vakuumkammer, wobei die Vakuumkammer umfasst:
eine erste Wand und eine zweite Wand, die die Außenoberfläche der Vakuumkammer definieren; und
eine Last innerhalb der Vakuumkammer;
wobei die Einrichtung mit gepulster Leistung weiter umfasst:
eine erste Leistungsübertragungsplatte, die sich vom Inneren der Vakuumkammer zum Äußeren der Vakuumkammer zwischen der ersten und zweiten Wand der Vakuumkammer erstreckt;
eine zweite Leistungsübertragungsplatte, die sich vom Inneren der Vakuumkammer zum Äußeren der Vakuumkammer zwischen der ersten und der zweiten Wand der Vakuumkammer erstreckt, wobei die erste und die zweite Leistungsübertragungsplatte angeordnet sind, um der Last eine Spannung zuzuführen;
ein Spannungserzeugungssystem zum Anlegen einer Spannung zwischen der ersten und zweiten Leistungsübertragungsplatte; und
eine Dichtung nach Anspruch 1, die zwischen der ersten und zweiten Wand, und zwischen der ersten und zweiten Leistungsübertragungsplatte abdichtet.

## Revendications

1. Joint d'étanchéité pour une chambre à vide, dans lequel la chambre à vide comprend une première paroi (2) et une seconde paroi (4), le joint d'étanchéité comprenant :
un premier bloc d'isolation externe (14) pour assurer l'étanchéité entre la première paroi de la chambre à vide et une première plaque de transmission de puissance (10) qui s'étend de l'intérieur depuis la chambre à vide jusqu'à l'extérieur de la chambre à vide entre les première et seconde parois de la chambre à vide ;
un second bloc d'isolation externe (16) pour assurer l'étanchéité entre la seconde paroi de la chambre à vide et une seconde plaque de transmission de puissance (12) qui s'étend depuis l'intérieur de la chambre à vide jusqu'à l'extérieur de la chambre à vide entre les première et seconde parois de la chambre à vide ;
dans lequel le joint d'étanchéité est **caractérisé par** :
un bloc d'isolation intermédiaire (34, 36) pour assurer l'étanchéité entre les première et seconde plaques de transmission de puissance, dans lequel le bloc d'isolation intermédiaire comprend une ou plusieurs fentes formées dans un premier côté du bloc d'isolation intermédiaire pour faire face à l'intérieur de la chambre à vide et une ou plusieurs fentes formées dans un second côté du bloc d'isolation intermédiaire pour faire face à l'extérieur de la chambre à vide ;
une ou plusieurs feuilles d'isolation intérieure (74, 76, 78) pour s'étendre entre les première et seconde plaques de transmission de puissance à l'intérieur de la chambre à vide, dans lequel les une ou plusieurs feuilles d'isolation intérieure sont agencées dans les une ou plusieurs fentes (62, 64, 66) dans le premier côté du bloc d'isolation intermédiaire ; et
une ou plusieurs feuilles d'isolation extérieure (80, 82, 84) pour s'étendre entre les première et seconde plaques de transmission de puissance à l'extérieur de la chambre à vide, dans lequel les une ou plusieurs feuilles d'isolation extérieure sont agencées dans les une ou plusieurs fentes (68, 70, 72) dans le second côté du bloc d'isolation intermédiaire.

2. Joint d'étanchéité selon la revendication 1, dans lequel le premier bloc d'isolation externe comprend des surfaces de contact pour assurer l'étanchéité contre la première paroi de la chambre à vide et la première plaque de transmission de puissance, dans lequel le second bloc d'isolation externe comprend des surfaces de contact pour assurer l'étanchéité contre la seconde paroi de la chambre à vide et la seconde plaque de transmission de puissance, et dans lequel le bloc d'isolation intermédiaire comprend des surfaces de contact pour assurer l'étanchéité contre les première et seconde plaques de transmission de puissance.

3. Joint d'étanchéité selon la revendication 2, dans lequel les surfaces de contact de chacun des blocs d'isolation comprennent une ou plusieurs rainures, dans lequel un matériau compressible est agencé dans chacune des rainures.

4. Joint d'étanchéité selon la revendication 3, dans lequel les rainures dans les surfaces de contact sont décalées les unes par rapport aux autres.

5. Joint d'étanchéité selon la revendication 2, 3 ou 4, dans lequel les surfaces de contact du bloc d'isolation intermédiaire présentent une dimension dans une direction à travers les parois de la chambre à vide qui est sensiblement égale à la dimension dans une direction à travers les parois de la chambre à vide de la surface de contact du bloc d'isolation externe adjacent, et facultativement dans lequel les premier et second blocs d'isolation externe et le bloc d'isolation intermédiaire comprennent un polymère, par exemple du polyéthylène haute densité.

6. Joint d'étanchéité selon l'une quelconque des revendications précédentes, dans lequel le bloc d'isolation intermédiaire comprend au moins deux fentes formées dans le premier côté du bloc d'isolation intermédiaire, et dans lequel le bloc d'isolation intermédiaire comprend au moins deux fentes formées dans le second côté du bloc d'isolation intermédiaire, et facultativement dans lequel le bloc d'isolation intermédiaire comprend une ou plusieurs fentes formées dans un ou plusieurs bords du premier côté adjacent à la première plaque de transmission de puissance et/ou une ou plusieurs fentes formées dans un ou plusieurs bords du second côté adjacent à la seconde plaque de transmission de puissance, et dans lequel les une ou plusieurs fentes de bord sont formées sous la forme d'une surépaisseur ou d'un cône dans le bloc d'isolation intermédiaire.

7. Joint d'étanchéité selon l'une quelconque des revendications précédentes, dans lequel le bloc d'isolation intermédiaire comprend une ou plusieurs fentes formées à distance des bords du premier côté et/ou du second côté du bloc d'isolation intermédiaire.

8. Joint d'étanchéité selon l'une quelconque des revendications précédentes, dans lequel le bloc d'isolation intermédiaire comprend une pluralité de sous-blocs, dans lequel au moins une des une ou plusieurs fentes est formée entre la pluralité de sous-blocs, et dans lequel un ou plusieurs des sous-blocs comprennent une ou plusieurs fentes formées dans un ou plusieurs bords du premier côté des sous-blocs et/ou une ou plusieurs fentes formées dans un ou plusieurs bords du second côté des sous-blocs, et facultativement dans lequel les sous-blocs comprennent des surfaces de contact pour assurer l'étanchéité contre un autre des sous-blocs, dans lequel une ou plusieurs des surfaces de contact des sous-blocs comprennent une ou plusieurs rainures, dans lequel un matériau compressible est agencé dans les rainures.

9. Joint d'étanchéité selon l'une quelconque des revendications précédentes, dans lequel le joint d'étanchéité comprend une pluralité de feuilles d'isolation dans chacune des une ou plusieurs fentes du bloc d'isolation intermédiaire.

10. Joint d'étanchéité selon l'une quelconque des revendications précédentes, dans lequel les une ou plusieurs feuilles d'isolation intérieure et extérieure sont composées d'un polyester, par exemple de polyéthylène téréphtalate à orientation biaxiale, et facultativement dans lequel le joint d'étanchéité présente une inductance inférieure à 10 nH, par exemple inférieure à 5 nH, par exemple inférieure à 3 nH.

11. Chambre à vide comprenant :
une première paroi et une seconde paroi définissant la surface externe de la chambre à vide ;
une charge à l'intérieur de la chambre à vide ;
une première plaque de transmission de puissance qui s'étend depuis l'intérieur de la chambre à vide jusqu'à l'extérieur de la chambre à vide entre les première et seconde parois de la chambre à vide ;
une seconde plaque de transmission de puissance qui s'étend depuis l'intérieur de la chambre à vide jusqu'à l'extérieur de la chambre à vide entre les première et seconde parois de la chambre à vide, dans laquelle les première et seconde plaques de transmission de puissance sont agencées pour délivrer une tension à la charge ; et
un joint d'étanchéité selon la revendication 1 assurant l'étanchéité entre les première et seconde parois et entre les première et seconde plaques de transmission de puissance.

12. Appareil d'alimentation en énergie électrique pour délivrer une tension à une charge dans une chambre à vide, dans lequel la chambre à vide comprend une première paroi et une seconde paroi, l'appareil d'alimentation en énergie électrique comprenant :
une première plaque de transmission de puissance pour s'étendre depuis l'intérieur de la chambre à vide jusqu'à l'extérieur de la chambre à vide entre les première et seconde parois de la chambre à vide ;
une seconde plaque de transmission de puissance destinée à s'étendre depuis l'intérieur de la chambre à vide jusqu'à l'extérieur de la chambre à vide entre les première et seconde parois de la chambre à vide, dans lequel les première et seconde plaques de transmission de puissance sont agencées pour délivrer une tension à la charge ; et
un joint d'étanchéité selon la revendication 1 assurant l'étanchéité entre les première et seconde parois et entre les première et seconde plaques de transmission de puissance.

13. Appareil à puissance pulsée comprenant :
une chambre à vide, la chambre à vide comprenant :
une première paroi et une seconde paroi définissant la surface externe de la chambre à vide ; et
une charge à l'intérieur de la chambre à vide ;
l'appareil à puissance pulsée comprenant en outre :
une première plaque de transmission de puissance qui s'étend depuis l'intérieur de la chambre à vide jusqu'à l'extérieur de la chambre à vide entre les première et seconde parois de la chambre à vide ;
une seconde plaque de transmission de puissance qui s'étend depuis l'intérieur de la chambre à vide jusqu'à l'extérieur de la chambre à vide entre les première et seconde parois de la chambre à vide, dans lequel les première et seconde plaques de transmission de puissance sont agencées pour délivrer une tension à la charge ;
un système de génération de tension pour appliquer une tension entre les première et seconde plaques de transmission de puissance ; et
un joint d'étanchéité selon la revendication 1 assurant l'étanchéité entre les première et seconde parois et entre les première et seconde plaques de transmission de puissance.
